# EUROPÄISCHE PATENTSCHRIFT

(11) **EP 0 587 029 B1**
(45) Veröffentlichungstag und Bekanntmachung des Hinweises auf die Patenterteilung: **05.03.1997**
(21) Anmeldenummer: 93113947.1
(22) Anmeldetag: 01.09.1993
(51) Int. Cl.: E02F 7/02, E02F 5/22, B60P 1/38, B60P 1/42

(54) **Vorrichtung zum Verfüllen von Gräben**
Trench backfill device
Dispositif de remblayage de tranchées

(30) Priorität: 08.09.1992 DE 9212096 U
(43) Veröffentlichungstag der Anmeldung: 16.03.1994
(73) Patentinhaber: Bilfinger + Berger Bauaktiengesellschaft, 68165 Mannheim (DE)
(72) Erfinder: Lüddecke, Kurt Dipl.-Ing., D-68782 Brühl (DE); Siefermann, Josef Masch.-Ing., D-68623 Lampertheim (DE)
(74) Vertreter: Schmid, Rudolf, Dipl.-Ing., Patentanwalt

(56) Entgegenhaltungen:
- DE-A- 2 554 607
- FR-A- 2 536 708
- NL-A- 6 700 149
- US-A- 2 417 020
- US-A- 2 439 541
- US-A- 2 503 129
- US-A- 3 409 155
- US-A- 3 561 681
- US-A- 3 844 433
- US-A- 4 109 336

## Beschreibung

Die Erfindung betrifft eine Vorrichtung zum Verfüllen von Gräben, mindestens umfassend: Ein Fahrzeug mit einer Fahrerkabine zum Transport eines Behälters für das Verfüllmaterial und eine Austragsvorrichtung, der das Verfüllmaterial mittels einer in dem Behälter angeordneten Beschickungsvorrichtung zugeführt wird, und die in dem zwischen Fahrerkabine und Behälter befindlichen Bereich des Fahrzeugs angeordnet und im wesentlichen quer zur Fahrzeugachse orientiert ist, so daß der Austrag des Verfüllmaterials an einer Seite des Fahrzeugs, im Sichtbereich einer in der Fahrzeugkabine befindlichen Person erfolgt.

Aus der US-A-3 844 433 ist ein Transportfahrzeug für kleinteiliges Material mit einem Vorratsbehälter und einer röhrenförmigen Austragsvorrichtung beschrieben. Die Austragsvorrichtung ist zwischen dem Fahrersitz und dem Vorratsbehälter quer zur Fahrrzeuglängsachse angeordnet und an ihrem unteren Ende gelenkig mit dem Boden des Behälters verbunden. Diese Gelenkverbindung erlaubt ein Verschwenken der Austragsvorrichtung zwischen den beiden Extremstellungen "senkrecht" und "waagerecht". Aufgrund der Anordnung der Gelenkverbindung am Ende der Austragsvorrichtung wird beim Verschwenken ein Kreissegment überstrichen, dessen Radius der vollen Länge der Austragsvorrichtung entspricht.

Aufgabe der vorliegenden Erfindung ist es, eine Vorrichtung zum Verfüllen von Gräben der in Rede stehenden Art anzugeben, mit der ein möglichst effizientes Vorgehen bei der Grabenverfüllung möglich ist, insbesondere ein einfaches und sicheres und zielgenaues Austragen des Materials einerseits und ein gute Manövrierung ohne übermäßigen Raumbedarf andererseits.

Die erfindungsgemäße Vorrichtung löst diese Aufgabe durch die Merkmale der Schutzansprüche 1 oder 2. danach ist die Vorrichtung zum Verfüllen von Gräben der in Rede stehenden Art so ausgebildet, daß die Austragsvorrichtung für den eigentlichen Verfüllprozeß in ihrem Mittelbreich gelenkig ausgebildet ist und aus einer Transportposition um dieses Gelenk in eine Arbeitsposition herausgeklappt und nach dem Verfüllprozeß wieder in die Transportposition (vollständig) eingeklappt werden kann, und daß sie seitlich, quer zur Fahrzeugachse verschiebbar bzw. verfahrbar ist, wobei eine stufenlose Veränderung erfolgt.

Es ist in jedem Falle ein Fahrzeugführer beim Grabenverfüllen erforderlich, der das Fahrzeug oder den Anhänger mit dem Behälter für das Verfüllmaterial bezüglich dem zu verfüllenden Graben positioniert und das gesamte Fahrzeug entlang des Grabenverlaufs bewegt. Der Fahrer ist jedoch während des eigentlichen Verfüllvorgangs nicht gefordert. Es wird daher vorgeschlagen, die Fernbedienung für die Verfüllwerkzeuge, d.h. die Austragsvorrichtung und den Antrieb für die Beschickungsvorrichtung, in der Fahrerkabine oder der Zugmaschine im Zugriffsbereich des Fahrers anzuordnen, so daß der Fahrer diese bedienen kann, ohne dazu die Fahrerkabine oder die Zugmaschine verlassen zu müssen. Es ist erkannt worden, daß die Austragsvorrichtung in diesem Falle so anzuordnen ist, daß sie von der Fahrerkabine oder der Zugmaschine aus zumindest über Rückspiegelkonstruktionen gut einsehbar ist.

Von besonderem Vorteil ist es, wenn ein Teil der Austragsvorrichtung für den eigentlichen Verfüllprozeß aus einer Transportposition in einer Arbeitsposition herausklappbar und nach dem Verfüllprozeß wieder in die Transportposition einklappbar ist. Das mit der Austragsvorrichtung und dem Behälter versehene Fahrzeug, einteilig oder aus Zugmaschine und Anhänger bestehend, verursacht dann keine unnötige Verkehrsbehinderung, da es die normale Breite eines Fahrzeugs bzw. einer Fahrbahnspur nicht überschreitet. Es kann also ohne besondere Vorkehrungen am Straßenverkehr teilnehmen. Ein weiterer Vorteil der ein- und ausklappbaren Austragsvorrichtung ergibt sich daraus, daß durch Einklappen der Austragsvorrichtung Hindernisse im Baustellenbereich, wie Verkehrsschilder oder Ampeln, umgangen werden können, ohne daß ein aufwendiger Manövriervorgang des gesamten Fahrzeugs erforderlich ist. Dieser Aspekt ist insbesondere deshalb wichtig, da Leitungsgräben meist im Gehwegebereich angeordnet sind.

Mit der erfindungsgemäßen Vorrichtung ist die Positionierung der Austragsvorrichtung bzgl. dem zu verfüllenden Graben einfacher zu gestalten, als durch entsprechende Ausrichtung des gesamten Fahrzeugs. Besonders vorteilhaft ist es, daß die Austragsvorrichtung seitlich, quer zur Fahrzeugachse verschiebbar bzw. verfahrbar ist. Durch entsprechende Verschiebung und Wahl der Förderrichtung der Austragsvorrichtung ein ist wahlweiser Austrag an beiden Seiten des Fahrzeugs möglich. Insbesondere bei komplizierten Grabenverläufen und unzugänglichem Gelände ist es von Vorteil, wenn die Austragsvorrichtung zudem zumindest in einem begrenzten Winkelbereich vertikal und/oder horizontal schwenkbar ist.

In der Praxis sind Gräben im allgemeinen durch Grabenabsperrungen gekennzeichnet und gesichert. Da die Grabenverfüllung im allgemeinen aus mehreren Verfüllvorgängen besteht, bei denen jeweils Lagen verschiedener Verfüllmaterialien in dem Graben eingeschichtet werden, ist es von Vorteil, wenn solche Grabenabsperrungen nicht extra für jeden Grabenverfüllvorgang entfernt und anschließend wieder erstellt werden müssen.

Bei einer besonders vorteilhaften Ausgestaltung der erfindungsgemäßen Vorrichtung zum Verfüllen von Gräben ist die Austragsvorrichtung deshalb derartig auf dem Fahrzeug oder dem Anhänger angeordnet oder höhenverstellbar gelagert, daß sie über die überlicherweise verwendeten Grabenabsperrungen eines zu verfüllenden Grabens reicht.

Es gibt nun verschiedene Möglichkeiten, die Austragsvorrichtung zu realisieren. Besonders vorteilhaft ist es, wenn die Austragsvorrichtung durch ein Förderband gebildet ist. Es sind aber auch andere Realisierungsmöglichkeiten beispielsweise in Form einer Schurre oder einem schwenkbaren Austragsrohr denkbar.

Insbesondere die Ausbildung der Austragsvorrichtung als antreibbare Schnecke, die überdies ein- und ausklappbar ausgestaltet sein kann, bietet unübersehbare Vorteile, was das Handling und die Haltbarkeit betrifft.

Auch die Beschickungsvorrichtung am Grunde des Behälters für das Verfüllmaterial kann durch unterschiedliche konstruktive Maßnahmen realisiert werden. So ist beispielsweise eine Beschickungsvorrichtung in Form eines Förderbandes denkbar. Besonders vorteilhaft ist es jedoch, wenn die Beschickungsvorrichtung durch eine im wesentlichen parallel zur Fahrzeugachse angeordnete, antreibbare Schnecke gebildet ist.

In diesem Falle läßt sich der Austrag des Verfüllmaterials dosieren, da mit jeder Umdrehung der Schnecke eine deffinierte Menge an Verfüllmaterial transportiert wird, die von dem Schneckendurchmesser und der Ganghöhe der Schnecke abhängt. Bei der erfindungsgemäßen Vorrichtung sind die Gewindeorientierung und die Antriebsrichtung der Schnecke so aufeinander abgestimmt, daß das Verfüllmaterial in Richtung der zwischen der Fahrerkabine oder der Zugmaschine und dem Behälter befindlichen Austragsvorrichtung befördert wird.

Bei der Verfüllung von Leitungsgräben wird das eingebaute Element, nämlich die Leitung, zunächst in Feinsand eingebettet. Es folgen eine Schicht Sand zur Grabenauffüllung, dann eine Schicht Mineralbeton als Unterbau, anschließend eine Schicht Bitumenkies als Unterdecke und schließlich eine weitere Schicht Bitumenkies für die Fertigdecke. Der zu verfüllende Mineralbeton weist im allgemeinen die größte Korngröße der verwendeten Materialien, nämlich ca. 54 mm, auf. Die von einer Schnecke maximal förderbare Korngröße ist nun abhängig vom Schneckendurchmesser und der Ganghöhe der Schnecke. Im allgemeinen entspricht der 10. Teil des Schneckendurchmessers der maximalen Korngröße. Es ist deshalb besonders vorteilhaft, wenn die die Beschickungsvorrichtung bildende Schnecke einen Durchmesser von mindestens 540 mm aufweist.

Eine bevorzugte Ausgestaltung der Erfindung ist die wannenartige Ausbildung des Behälters für das Verfüllmaterial, wobei der Behälterquerschnitt im wesentlichen die Form eines, bevorzugterweise achsensymmetrischen, Trapezes Trapezes hat. Vor allem im Zusammenhang mit der Verwendung eines Förderbandes als Beschickungsvorrichtung kann diese Ausführungsform ihre Vorteile entfalten: Der Boden eines solchen Behälters kann in seiner ganzen Breite durch das Förderband gebildet werden, sodaß durch die Bewegung des Förderbandes der gesamte Behälterinhalt zur Austragsvorrichtung hin bewegt wird; der Behälter leert sich also zunächst am der Austragsvorrichtung gegenüberliegenden Ende. Eine einzige Rotation des Förderbandes genügt dann, um den Behälter vollständig zu entleeren.

Besonders vorteilhaft ist es dabei, wenn die Seitenwände des Behälters eine Neigung von 50° bis 70° gegen die Horizontale aufweisen; die Reibung zwischen dem sich mit dem Förderband bewegenden Verfüllmaterial und den Seitenwänden ist dadurch sehr gering, ohne daß das Förderband eine vom konstruktiven Aufwand her nicht mehr vertretbare Breite aufweisen muß.

In einer anderen vorteilhaften Ausführungsform der Erfindung ist der Behälter für das Verfüllmaterial wannenartig mit einem im wesentlichen dreieckigen Querschnitt ausgebildet, wobei die die Beschickungsvorrichtung bildende Schnecke im Bereich der nach unten weisenden Spitze des dreieckigen Querschnitts angeordnet ist.

Das Verfüllmaterial wird in diesem Falle immer vom Grunde des Behälters in Richtung der Austragvorrichtung befördert. Das Verfüllmaterial rutscht automatisch immer in den Mitnahmebereich der Schnecke nach, so daß das in dem Behälter befindliche Verfüllmaterial weitgehend vollständig ausgetragen werden kann.

Im Hinblick auf die Verwendung von warmem Verfüllmaterial, wie beispielsweise dem Bitumenkies für die Fertigdecke, ist es vorteilhaft, wenn der Behälter verschließbar ist und dazu mit einem Deckel versehen und auch beheizbar ist, so daß das Verfüllmaterial nicht bereits auf dem Weg von der Füllstation zur Baustelle auskühlt, aushärtet und dadurch unbrauchbar wird.

Die erfindungsgemäße Vorrichtung zum Verfüllen von Gräben kann in Verbindung mit einem serienmäßigen LKW oder einer serienmäßigen Zugmaschine realisiert werden. Besonders vorteilhaft ist es, ein solches Fahrzeug mit einem Spezialzusatzgetriebe zum Langsamfahren auszustatten, so daß der Fahrer im Standgasbetrieb mit einer Geschwindigkeit von ca. 1,2 km/h fahren kann, was ihm ermöglicht, sowohl den Verfüllprozeß fernzusteuern als auch das Fahrzeug zu lenken.

Mit der erfindungsgemäßen Vorrichtung ist es nun möglich, eine besonders effiziente Grabenverfüllung vorzunehmen, die im wesentlichen von nur einer Person, nämlich dem Fahrzeugführer, durchgeführt werden kann. Die erfindungsgemäße Vorrichtung kann außerdem für alle nacheinander bei der Grabenauffüllung erforderlichen Verfüllmaterialien verwendet werden. Dazu fährt der Fahrer mit dem anfänglich leeren Behälter zu einer Füllstation, wo der Behälter mit der erforderlichen Menge des ersten Verfüllmaterials bestückt wird.

Der Fahrer fährt dann zu dem zu befüllenden Graben und kann nun ohne zusätzliche Hilfspersonen den Graben ferngesteuert selbst befüllen. Ist das Verfüllmaterial vollständig ausgetragen, so fährt der Fahrer zu der Füllstation, wo der Behälter mit dem nun erforderlichen Verfüllmaterial befüllt wird. Dies wird so lange wiederholt, bis der Verfüllprozeß abgeschlossen ist.

Es gibt nun verschiedene Möglichkeiten, die Lehre der vorliegenden Erfindung in vorteilhafter Weise auszugestalten und weiterzubilden. Dazu ist einerseits auf die dem Schutzanspruch 1 nachgeordneten Ansprüche und andererseits auf die nachfolgende Erläuterung von vier Ausführungsbeispielen der Erfindung anhand der Zeichnung zu verweisen.

In Verbindung mit der Erläuterung der Ausführungsbeispiele der Erfindung anhand der Zeichnung werden auch im allgemeinen bevorzugte Ausgestaltungen und Weiterbildungen der Lehre erläutert.

In der Zeichnung zeigt:
- Figur 1: einen Teilschnitt durch eine erfindungsgemäße Vorrichtung mit einer Austragsvorrichtung in Transportposition.
- Figur 2: einen Teilschnitt durch eine erfindungsgemäße Vorrichtung mit einer Austragsvorrichtung in Arbeitsposition und
- die Figuren 3a bis 3c: Teilschnitte durch eine erfindungsgemäße Vorrichtung mit verschiedenen möglichen Positionen der Austragsvorrichtung.

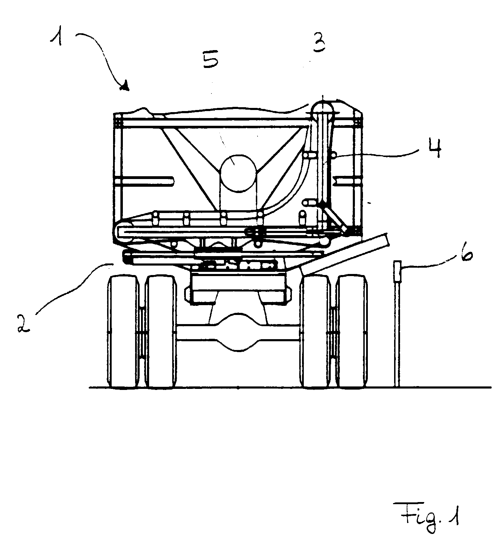

In Figur 1 ist eine Vorrichtung 1 zum Verfüllen von Gräben dargestellt, die ein Fahrzeug 2 zum Transport eines Behälters 3 für Verfüllmaterial umfaßt sowie eine Austragsvorrichtung 4, der das Verfüllmaterial mittels einer in dem Behälter 3 angeordneten Beschickungsvorrichtung 5 zugeführt wird. Die Austragsvorrichtung 4 ist in dem zwischen der Fahrerkabine oder der Zugmaschine und dem Behälter 3 befindlichen Bereich des Fahrzeugs 2 angeordnet und im wesentlichen quer zur Fahrzeugachse orientiert, so daß der Austrag des Verfüllmaterials an einer Seite des Fahrzeugs 2 im Sichtbereich einer in der Fahrerkabine oder Zugmaschine befindlichen Person erfolgt.

Die Austragsvorrichtung 4 wird in dem in Figur 1 dargestellten Ausführungsbeispiel durch ein Förderband gebildet und ist hier in einer Transportposition, d.h. senkrecht nach oben geklappt, dargestellt. Auf diese Weise wird die Breite des beispielsweise durch einen serienmäßigen LKW gebildeten Fahrzeugs 2 nicht vergrößert. Die Austragsvorrichtung 4 ist derartig angeordnet, daß sie selbst im ausgeklappten Zustand, also in ihrer Arbeitsposition über eine üblicherweise verwendete Grabenabsperrung 6 hinwegreicht.

Der Figur 1 ist ferner die Querschnittsform des Behälters 3 zu entnehmen, die im wesentlichen dreieckig ist. Der Behälter 3 ist wannenartig ausgebildet. Am Grunde des Behälters 3 ist die Beschickungsvorrichtung 5 in Form einer parallel zur Fahrzeugachse ausgerichteten Schnecke angeordnet.

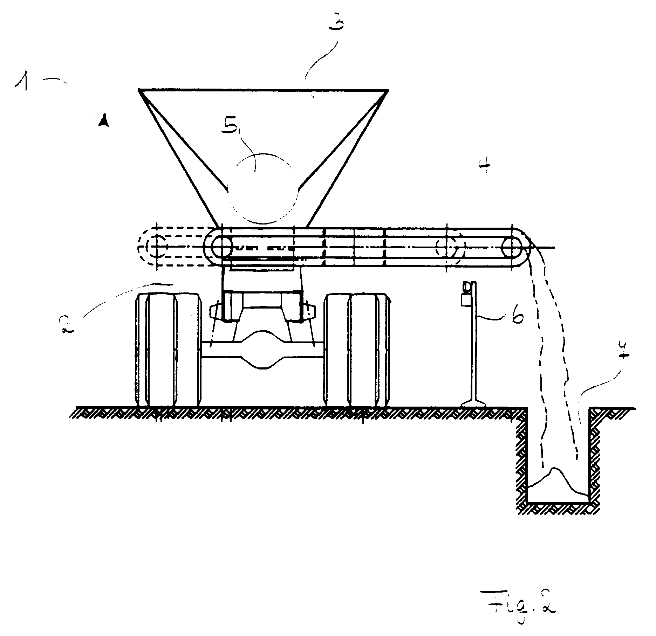

In Figur 2 ist eine erfindungsgemäße Vorrichtung als Anhänger ohne Zugmaschine dargestellt, die im wesentlichen dieselben konstruktiven Elemente aufweist, wie die in Figur 1 dargestellte Vorrichtung. Die Austragsvorrichtung 4 ist in diesem Falle jedoch ausgeklappt, d.h. in Arbeitsposition. Der Anhänger ist entsprechend neben einem zu verfüllenden Graben 7 positioniert, der durch eine Grabenabsperrung 6 gekennzeichnet und gesichert ist. Die Austragsvorrichtung 4 ragt über die Grabenabsperrung 6 hinaus.

In der Figur 2 ist ferner durch die gestrichelte Darstellung der Austragsvorrichtung 4 angedeutet, daß diese seitlich, quer zur Fahrzeugachse verschiebbar ist. Mit einer derartigen Austragsvorrichtung 4 ist also ein zweiseitiger Austrag von Verfüllmaterial möglich, ohne daß dazu die Fahrzeugposition verändert werden muß.

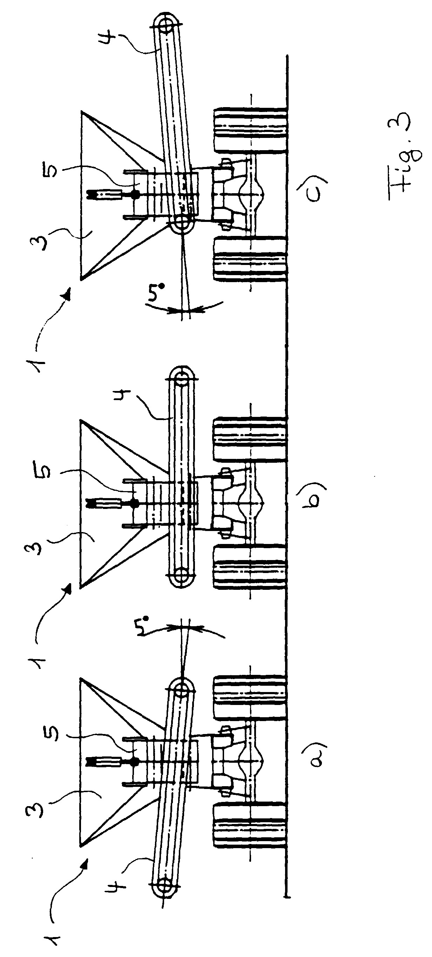

In den Figuren 3a bis 3c ist jeweils eine erfindungsgemäße Vorrichtung 1 mit im wesentlichen denselben konstruktiven Elementen wie bei den in den Figuren 1 und 2 dargestellten Vorrichtungen 1 dargestellt. Die Beschickungsvorrichtung 3 wird in diesem Falle jedoch nicht durch eine parallel zur Fahrzeugachse ausgerichtete Schnecke, sondern durch ein entsprechend ausgerichtetes Förderband 10 gebildet. Dargestellt sind drei verschiedene Positionen einer seitlich verschiebbaren und vertikal schwenkbaren Austragsvorrichtung 4.

Hinsichtlich weiterer in den Figuren nicht gezeigter Merkmale wird auf den allgemeinen Teil der Beschreibung verwiesen.

Abschließend sei hervorgehoben, daß die erfindungsgemäße Lehre nicht auf die voranstehend erörterten Ausführungsbeispiele beschränkt ist. Die erfindungsgemäße Lehre läßt sich vielmehr auch bei anders ausgestalteten Grabenverfüllvorrichtungen realisieren.

## Patentansprüche

1. Vorrichtung zum Verfüllen von Gräben (7), mindestens umfassend ein Fahrzeug (2) mit einer Fahrerkabine (8) zum Transport eines Behälters (3) für das Verfüllmaterial und eine Austragsvorrichtung (4), der das Verfüllmaterial mittels einer in dem Behälter (3) angeordneten Beschickungsvorrichtung (5) zugeführt wird, und die in dem zwischen Fahrerkabine (8) und Behälter (3) befindlichen Bereich des Fahrzeugs (2) angeordnet und im wesentlichen quer zur Fahrzeugachse orientiert ist, so daß der Austrag des Verfüllmaterials an einer Seite des Fahrzeugs (2) , im Sichtbereich einer in der Fahrzeugkabine (8) befindlichen Person erfolgt,
dadurch gekennzeichnet,
daß die Austragsvorrichtung (4) für den eigentlichen Verfüllprozeß in ihrem Mittelbereich gelenkig ausgebildet ist und aus einer Transportposition um dieses Gelenk in eine Arbeitsposition herausklappbar und nach dem Verfüllprozeß wieder in die Transportposition (vollständig) einklappbar ist, und daß sie seitlich, quer zur Fahrzeugachse verschiebbar bzw. verfahrbar ist, wobei eine stufenlose Veränderung erfolgt .

2. Vorrichtung zum Verfüllen von Gräben (7), mindestens umfassend einen Anhänger zum Transport eines Behälters (3) für das Verfüllmaterial, wobei der Anhänger mit einer Zugmaschine lösbar verbunden ist, und eine Austragsvorrichtung (4), der das Verfüllmaterial mittels einer in dem Behälter (3) angeordneten Beschickungsvorrichtung (5) zugeführt wird, und die in dem zwischen der Zugmaschine und Behälter (3) befindlichen Bereich des Anhängers angeordnet und im wesentlichen quer zur Fahrzeugachse orientiert ist, so daß der Austrag des Verfüllmaterials an einer Seite des Anhängers, im Sichtbereich einer in der Zugmaschine befindlichen Person erfolgt,
dadurch gekennzeichnet,
daß die Austragsvorrichtung (4) für den eigentlichen Verfüllprozeß in ihrem Mittelbereich gelenkig ausgebildet ist und aus einer Transportposition um dieses Gelenk in eine Arbeitsposition herausklappbar und nach dem Verfüllprozeß wieder in die Transportposition (vollständig) einklappbar ist, und daß sie seitlich, quer zur Fahrzeugachse verschiebbar bzw. verfahrbar ist, wobei eine stufenlose Veränderung erfolgt.

3. Vorrichtung nach Anspruch 1 oder 2, dadurch gekennzeichnet,
daß die Austragsvorrichtung (4) zumindest in einem begrenzten Winkelbereich vertikal und/oder horizontal schwenkbar ist.

4. Vorrichtung nach einem der Ansprüche 1 bis 3, dadurch gekennzeichnet,
daß die Austragsvorrichtung (4) derartig auf dem Fahrzeug (2) oder dem Anhänger angeordnet oder höhenverstellbar gelagert ist, daß sie über die Grabenabsperrung (6) eines zu verfüllenden Grabens (7) reicht.

5. Vorrichtung nach einem der Ansprüche 1 bis 4, dadurch gekennzeichnet,
daß die Austragsvorrichtung (4) durch ein Förderband gebildet ist.

6. Vorrichtung nach einem der Ansprüche 1 bis 5, dadurch gekennzeichnet,
das die Beschickungsvorrichtung (5) durch ein am Grund des Behälters (3), im wesentlichen parallel zur Fahrzeug- bzw. Anhängerachse angeordnetes Förderband gebildet ist.

7. Vorrichtung nach einem der Ansprüche 1 bis 6, dadurch gekennzeichnet,
daß die Beschickungsvorrichtung (5) durch eine am Grund des Behälters (3), im wesentlichen parallel zur Fahrzeug- bzw. Anhängerachse angeordnete, antreibbare Schnecke gebildet ist.

8. Vorrichtung nach nach einem der Ansprüche 1 bis 7, dadurch gekennzeichnet,
daß die Gewindeorientierung und die Antriebsrichtung der Schnecke so aufeinander abgestimmt sind, daß das Verfüllmaterial in Richtung der Austragsvorrichtung (4) befördert wird.

9. Vorrichtung nach Anspruch 8 , dadurch gekennzeichnet,
daß die Schnecke einen Durchmesser von mindestens 540 mm aufweist.

10. Vorrichtung nach einem der Ansprüche 1 bis 9, dadurch gekennzeichnet,
daß der Behälter (3) für das Verfüllmaterial mit einem im wesentlichen trapezförmigen Querschnitt ausgebildet ist.

11. Vorrichtung nach einem der Ansprüche 1 bis 10, dadurch gekennzeichnet,
daß der Boden des Behälters (3) durch das Förderband (10) gebildet wird, wobei die Bewegungsrichtung des Förderbandes (10) zur Austragsvorrichtung (4) hin zeigt.

12. Vorrichtung nach einem der Ansprüche 1 bis 11, dadurch gekennzeichnet,
daß die Seitenwände (11) des Behälters (3) eine Neigung von 50°-70° gegen die Horizontale aufweisen.

13. Vorrichtung nach einem der Ansprüche 1 bis 12, dadurch gekennzeichnet,
daß der Behälter (3) für das Verfüllmaterial wannenartig mit einem im wesentlichen dreieckigen Querschnitt ausgebildet ist.

14. Vorrichtung nach einem der Ansprüche 1 bis 13, dadurch gekennzeichnet,
daß der Behälter (3) mit einem aufldappbaren Deckel versehen ist.

15. Vorrichtung nach einem der Ansprüche 1 bis 14, dadurch gekennzeichnet,
daß der Behälter (3) beheizbar ist.

16. Vorrichtung nach einem der Ansprüche 1 bis 15, dadurch gekennzeichnet,
daß das Fahrzeug oder die Zugmaschine mit einem Spezialzusatzgetriebe zum Langsamfahren ausgestattet ist.

## Claims

1. Device for the backfilling of ditches (7), composed of at least a vehicle (2) with driver's cab (8) for the haulage of a container (3) holding the backfill material, as well as of a discharge device (4), with the backfill material being fed into the discharge device by means of a feed unit (5) mounted in the container (3) and with the discharge device being arranged - in the section of the vehicle (2) between the driver's cab (8) and the container (3) - in a position substantially at right angle to the vehicle axle in such a way as to enable the backfill material to be discharged on one side of the vehicle (2) within the visual range of a person seated inside the driver's cab (8), wherein
the discharge device (4) used for the backfill process proper is equipped, in its middle section, with an articulated joint enabling the discharge device to be tilted around said articulated joint from its transport or home position into the working position and, upon completion of the backfill cycle, to be tilted (completely) back into the transport or home position, said discharge device offering the possibility to displace or shift it to either side, out of its longitudinal axis hence at right angle to the vehicle axle, with said movement of lateral displacement or shift of the discharge device being continuously adjustable.

2. Device for the backfilling of ditches (7), composed of at least a trailer (2) - coupled with the tractor in a detachable configuration - for the haulage of a container (3) holding the backfill material, as well as of a discharge device (4), with the backfill material being fed into the discharge device by means of a feed unit (5) mounted in the container (3) and with said discharge device being arranged - in the area of the trailer between the tractor and the container (3) - in a position substantially at right angle to the vehicle axle in such a way as to enable the backfill material to be discharged on one side of the trailer within the visual range of a person seated inside the tractor, ***wherein***
the discharge device (4) used for the backfill process proper is equipped, in its middle section, with an articulated joint enabling the discharge device to be tilted around said articulated joint from the transport or home position into the working position and, upon completion of the backfill cycle, to be tilted (completely) back into the transport or home position, said discharge device offering the possibility to displace or shift it to either side, out of its longitudinal axis hence at right angle to the vehicle axle, with said movement of lateral displacement or shift of the discharge device being continuously adjustable.

3. Device according to claim 1 or claim 2, ***wherein*** the discharge device (4) can be swiveled vertically and/or horizontally at least through a limited sector of dial.

4. Device according to either of claims 1 to 3, ***wherein*** the discharge device (4) is arranged, or supported in a vertically adjustable configuration, on the vehicle (2) or trailer in such a way as to extend above and beyond the cordoning-off installations (6), if any, of a ditch (7) to be backfilled.

5. Device according to either of claims 1 to 4, ***wherein*** the discharge device (4) consists of a conveydr belt.

6. Device according to claims either of 1 to 5, ***wherein*** the feed unit (5) consists of a conveyor belt mounted to the bottom of the container (3) in a position substantially parallel to the tractor axle or trailer axle, respectively.

7. Device according to either of claims 1 to 6, ***wherein*** the feed unit (5) consists of a drivable endless screw mounted to the bottom of the container (3) in a position substantially parallel to the tractor axle or trailer axle, respectively.

8. Device according to either of claims 1 to 7, ***wherein*** the orientation and the direction of drive of the endless screw are adjusted to each other in such a way as to have the backfill material conveyed in the direction of the discharge device (4).

9. Device according to claim 8, ***wherein*** the endless screw has a diameter of at least 540 mm.

10. Device according to either of claims 1 to 9, ***wherein*** the container (3) receiving the backfill material has a substantially trapezoidal cross section.

11. Device according to either of claims 1 to 10, ***wherein*** the bottom of the container (3) is constituted by the conveyor belt (10), with the guide motion of the conveyor belt (10) pointing towards the discharge device (4).

12. Device according to either of claims 1 to 11, ***wherein*** the side walls of the container (3) are inclined by 50° to 70° with regard to the horizontal line.

13. Device according to either of claims 1 to 12, ***wherein*** the container (3) receiving the backfill material assumes the form of a trough of a substantially triangular cross section.

14. Device according to either of claims 1 to 13, ***wherein*** the container (3) is equipped with a hinged cover.

15. Device according to either of claims 1 to 14, ***wherein*** the container (3) is of the heatable type.

16. Device according to either of claims 1 to 15, ***wherein*** the vehicle or the tractor are equipped with a special low-speed auxiliary transmission.

## Revendications

1. Equipement pour le remplissage de fossés (7), comprenant au moins un véhicule (2) avec une cabine de chauffeur (8) et destiné au transport d'une benne (3) pour le matériau de remplissage et un appareil de déchargement (4) auquel est amené le matériau de remplissage au moyen d'un dispositif de chargement (5) situé à l'intérieur de la benne, équipement qui se trouve dans la zone du véhicule (2) comprise entre la cabine du chauffeur (8) et la benne (3) et dont l'orientation fondamentale est perpendiculaire à l'axe du véhicule, si bien que le déchargement du matériau de remplissage se fait d'un côté du véhicule (2), dans le champ de vision d'une persone située dans la cabine du chauffeur (8),
caractérisé en ce que
l'appareil de déchargement (4) pour le processus de remplissage en tant que tel est articulé en son milieu, peut être déplié de sa position de transport en position de travail grâce à cette articulation, puis replié (complètement) en position de transport une fois le remplissage achevé, et qu'on le déplacer ou le faire coulisser latéralement, perpendiculairement à l'axe du véhicule, le déplacement s'effectuant sans palier.

2. Equipement pour le remplissage de fossés (7) comprenant au moins une remorque pour le transport d'une benne (3) réservée au matériau de remplissage, où la remorque est reliée par un accouplement mobile à un dispositif de traction, et un appareil de déchargement (4) auquel est amené le matériau de remplissage au moyen d'un dispositif de chargement (5) situé dans la benne (3), équipement qui se trouve dans la zone de la remorque comprise entre l'appareil de traction et la benne (3) et dont l'orientation est essentiellement perpendiculaire à l'axe du véhicule, si bien que le déchargement du matériau de remplissage se fait d'un côté du véhicule (2), dans le champ de vision d'une persone située dans l'appareil de traction,
caractérisé en ce que
l'appareillage de déchargement (4) pour le processus de remplissage en tant que tel est articulé en son milieu, peut être déplié de sa position de transport en position de travail grâce à cette articulation, puis replié (complètement) en position de transport une fois le remplissage terminé, et qu'on le déplacer ou le faire coulisser latéralement, perpendiculairement à l'axe du véhicule, le déplacement s'effectuant sans palier.

3. Equipement selon revendication 1 ou 2, caractérisé en ce que
l'appareillage de déchargement (4) dispose d'une plage de pivotement verticale et/ou horizontale, au moins limitée.

4. Equipement selon une des revendications 1 à 3, caractérisé en ce que l'appareil de déchargement (4) est disposé sur le véhicule (2) ou la remorque de telle manière qu'il puisse atteindre le fossé remplir (7), par dessus la barrière de protection (6), ou qu'il soit réglable en hauteur de manière remplir cette condition.

5. Equipement selon une des revendications 1 à 4, caractérisé en ce que
l'appareil de déchargement (4) est constitué par une bande transporteuse.

6. Equipement selon une des revendications 1 à 5, caractérisé en ce que
le dispositif de chargement (5) est constitué par une bande transporteuse située au fond de la benne (3) et montée essentiellement en parallèle à l'axe du véhicule ou de la remorque.

7. Equipement selon une des revendications 1 à 6, caractérisé en ce que
le dispositif de chargement (5) est constitué par une vis transporteuse sans fin pouvant être entraînée par un moteur et située au fond de la benne (3), vis qui est montée essentiellement en parallèle à l'axe du véhicule ou de la remorque.

8. Equipement selon une des revendications 1 à 7, caractérisé en ce que
l'orientation du filet et le sens d'entraînement de la vis sont adaptés l'un à l'autre de manière à ce que le matériau de remplissage soit transporté en direction de l'appareil de déchargement (4).

9. Equipement selon revendication 8, caractérisé en ce que
la vis sans fin présente un diamètre minimal de 540 mm.

10. Equipement selon une des revendications 1 à 9, caractérisé en ce que
la benne (3) réservée au matériau de remplissage est constituée fondamentalement par une section en forme de trapèze.

11. Equipement selon une des revendications 1 à 10, caractérisé en ce que
le fond de la benne (3) est constitué par la bande transporteuse (10), bande qui se déplace en direction de l'appareil de déchargement (4).

12. Equipement selon une des revendications 1 à 11, caractérisé en ce que
les parois latérales (11) de la benne (3) présentent une inclinaison de 50 - 70° par rapport à l'horizontale.

13. Equipement selon une des revendications 1 à 12, caractérisé en ce que
la benne (3) pour le matériau de remplissage est constituée par un bac de section essentiellement triangulaire.

14. Equipement selon une des revendications 1 à 13, caractérisé en ce que
la benne (3) est équipée d'un couvercle rabattable.

15. Equipement selon une des revendications 1 à 14, caractérisé en ce que
la benne (3) est chauffable.

16. Equipement selon une des revendications 1 à 15, caractérisé en ce que
le véhicule ou l'appareil de traction est équipé d'une boîte de vitesses supplémentaire pour la marche à petite vitesse.
